# EUROPÄISCHE PATENTSCHRIFT

(11) **EP 0 820 584 B1**
(45) Veröffentlichungstag und Bekanntmachung des Hinweises auf die Patenterteilung: **21.05.2003**
(21) Anmeldenummer: 97902360.3
(22) Anmeldetag: 11.02.1997
(51) Int. Cl.: G01N 21/90, B65G 47/244, B08B 9/46

(54) **INSPEKTIONSMASCHINE FÜR GEFÄSSE**
INSPECTION MACHINE FOR CONTAINERS
MACHINE D'INSPECTION POUR CONTENANTS

(30) Priorität: 13.02.1996 DE 19605133
(43) Veröffentlichungstag der Anmeldung: 28.01.1998
(73) Patentinhaber: KRONES AG Hermann Kronseder Maschinenfabrik, D-93068 Neutraubling (DE)
(72) Erfinder: HALBO, Hansjörg, D-93073 Neutraubling (DE)
(74) Vertreter: Grünecker, Kinkeldey, Stockmair & Schwanhäusser Anwaltssozietät
(86) Internationale Anmeldenummer: EP9700623
(87) Internationale Veröffentlichungsnummer: WO97030343

(56) Entgegenhaltungen:
- EP-A- 0 186 278
- EP-A- 0 415 154
- EP-A- 0 487 402
- DE-U- 9 310 623

## Beschreibung

Die Erfindung betrifft eine Inspektionsmaschine für Gefäße.

Eine Inspektionsmaschine gemäß dem Oberbegriff des Anspruchs 1 ist bereits aus der EP-A-0 487 402 bekannt. Diese Druckschrift zeigt eine Bodeninspektionsvorrichtung, die in einer Lücke zwischen einem Zuförderer und einem Abförderer angeordnet ist, wobei die Flaschen durch einen Zwischenförderer über die Lücke hinweg transportiert werden. Eine Seiteninspektionsvorrichtung ist nicht vorhanden.

Die Druckschrift EP-A-0186 278 zeit eine Inspektionsmaschine für Gefäße mit zwei Seiteninspektionsvorrichtungen und einem dazwischen angeordneten Drehförderer. Eine Bodeninspektionsvorrichtung ist nicht vorhanden.

Das Gebrauchsmuster **DE-U-93 10 623.8** beschreibt eine Flascheninspektionsvorrichtung, bestehend aus einem Zuförderer, einem Abförderer und einem Zwischenförderer, der aus zwei seitlich an den Flaschen angreifenden Förderbändern besteht und die Flaschen über eine Lücke zwischen Zu- und Abförderer transportiert. Im Bereich des Zuförderers befindet sich eine Seiteninspektionsvorrichtung, im Bereich des Zwischenförderers eine Bodeninspektionsvorrichtung.

Es ist auch bereits eine Inspektionsmaschine in Gebrauch, bei welcher der mit einem angetriebenen endlosen Fördermittel und einer gegenüberliegenden stationären Friktionsfläche arbeitende Drehförderer am Zuförderer mit Abstand vor dem Zwischenförderer angeordnet ist und zwar im Wirkungsbereich der einzigen Seiteninspektionsvorrichtung. Diese bekannte Inspektionsmaschine ermöglicht bei kompakter Bauweise eine Überprüfung der Gefäße auf Verschmutzungen, Fehler usw. sowohl im Boden- als auch im Wandungsbereich. Die Gefäße werden durch die mit gleicher Geschwindigkeit angetriebenen Fördermittel des Zwischenförderers sicher stehend an den Abförderer übergeben. Ungünstig ist jedoch, dass der Drehförderer nur im untersten Wandungsbereich der Gefäße angreifen kann, um das Sichtfeld der Seiteninspektionsvorrichtung nicht zu stark einzuschränken. Da außerdem auf einer relativ kurzen Transportstrecke ein großer Drehwinkel erforderlich ist, ist der Gefäßtransport im Bereich des Drehförderers äußerst instabil und das Inspektionsergebnis entspricht nicht den Anforderungen. Außerdem können die Gefäße sehr leicht umfallen, bevor sie nach dem Passieren des Drehförderers vom Zwischenförderer erfaßt werden. Die bekannte Inspektionsmaschine ist daher für hohe Leistungen nicht geeignet.

Weiter ist eine Inspektionsmaschine mit einem Zuförderer, einem mit Abstand davon angeordneten Abförderer und einem die Gefäße zwischen Zu- und Abförderer überführenden Zwischenförderer in Gebrauch, bei der eine erste Seiteninspektionsvorrichtung am Zuförderer, eine zweite Seiteninspektionsvorrichtung am Abförderer und eine Bodeninspektionsvorrichtung im Bereich der Lücke zwischen Zu- und Abförderer angeordnet ist. Der Zwischenförderer weist zwei an gegenüberliegenden Seiten der Gefäße angreifende, mit unterschiedlicher Geschwindigkeit angetriebene endlose Fördermittel auf, welche die Gefäße auf ihrem Weg vom Zuförderer zum Abförderer um einen bestimmten Winkel verdrehen. Die Gefäße werden somit drehend vom Zwischenförderer an den Abförderer abgegeben, können leicht ins Taumeln geraten und umkippen. Beschädigungen der zweiten Seiteninspektionsvorrichtung und schwerwiegende Betriebsstörungen sind die Folge. Außerdem kann durch die Eigenrotation der Gefäße im Bereich der Bodeninspektionsvorrichtung kann deren Funktion gestört werden.

Der Erfindung liegt die Aufgabe zugrunde, die Inspektionsmaschine der eingangs genannten Art hinsichtlich der Leistungsfähigkeit und Betriebssicherheit des Gefäßtransports und hinsichtlich der Inspektionsgenauigkeit im Bereich der Seitenwandinspektion zu verbessern.

Diese Aufgabe wird erfindungsgemäß durch die im Anspruch 1 angegebenen Merkmale gelöst.

Bei einer erfindungsgemäßen Inspektionsmaschine findet während der Seiteninspektion keinerlei Drehung der Gefäße statt. Der Drehförderer kann daher beliebig lange und in den gewünschten Bereichen an den Gefäßen angreifen und diese auch bei hohen Leistungen zuverlässig und stabil um den gewünschten Winkel verdrehen. Wesentlich hierfür ist auch, dass die Gefäße während der Eigenrotation auf dem Zuförderer stehen. Spätestens beim Einlauf in den Zwischenförderer wird ein verbleibender Drehimpuls der Gefäße abgebremst, da dessen Fördermittel mit der absolut gleichen Geschwindigkeit umlaufen und damit die Flasche ohne Drehimpuls an den Abförderer übergeben.

Durch die darin angegebene überlappende Anordnung von Drehförderer und Zwischenförderer mit koaxialen Umlenkrädem wird ein
nahtloser Übergang der Gefäße vom Drehförderer zum Zwischenförderer ermöglicht. Die Gefäße können daher auf kurzem Weg sehr schnell gedreht werden und werden nach der Drehung direkt durch den Zwischenförderer aufgenommen und erforderlichenfalls abgebremst. Dieser gibt sie dann ohne Drehung an den Abförderer weiter. Ein durch die Gefäßrotation hervorgerufenes Taumeln oder gar Kippen der Gefäße wird so sicher vermieden.

Vorteilhafte Weiterbildungen der Erfindung, die alle zu einem besonders stabilen Gefäßtransport beitragen, sind in den Unteransprüchen enthalten.

Im Nachstehenden wird ein Ausführungsbeispiel der Erfindung anhand der Zeichnungen beschrieben. Es zeigen:
- Figur 1: die Seitenansicht einer Inspektionsmaschine,
- Figur 2: die Draufsicht auf die Inspektionsmaschine nach Fig. 1.

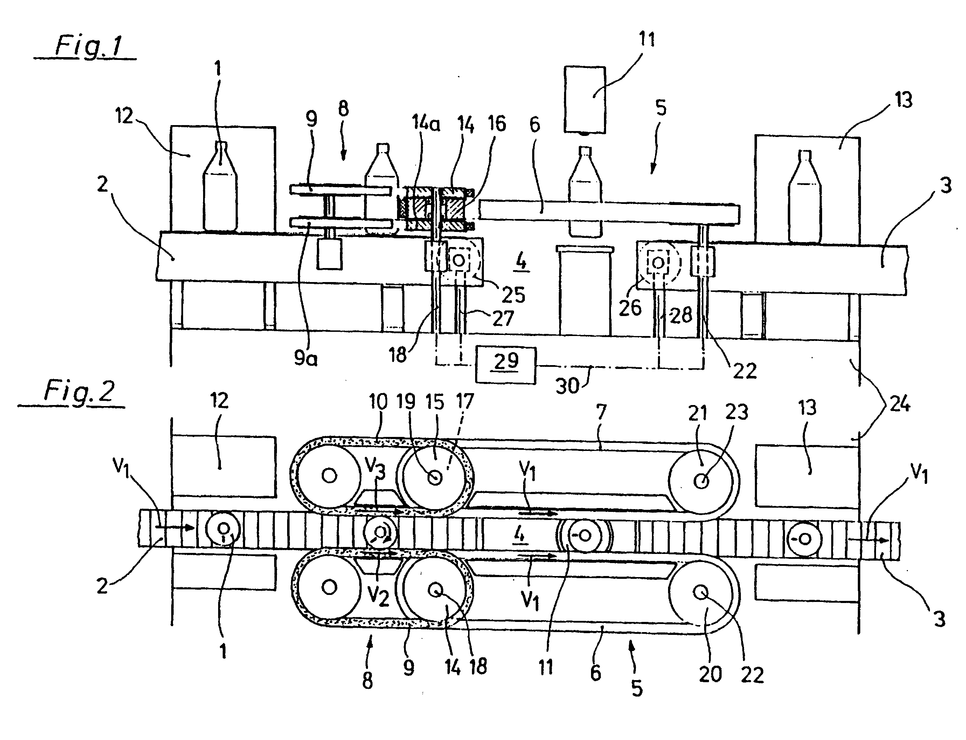

Die Inspektionsmaschine nach Figur 1 und 2 ist zum Überprüfen von aufrechtstehenden Mehrwegflaschen aus Glas mit rotationssymmetrischer Grundform, im Nachstehenden Flaschen 1 genannt, auf Verschmutzungen und Fremdkörper im Bereich des Bodens und der Seitenwand eingerichtet. Sie weist ein Gehäuse 24 auf, an dessen Oberseite ein Zuförderer 2, ein Abförderer 3, ein Drehförderer 8 und ein Zwischenförderer 5 für die geradlinig die Inspektionsmaschine durchlaufenden Flaschen 1 angeordnet sind.

Der Zuförderer 2 und der damit fluchtende Abförderer 3 weisen Schamierbandketten auf, die über Kettenräder 25, 26 laufen und durch Antriebswellen 27, 28 angetrieben werden.

Die Scharnierbandketten bilden horizontale Förderflächen, auf denen die Flaschen 1 stehen und soweit erforderlich durch nicht gezeigte seitliche Geländer geführt werden. Zwischen dem Zuförderer 2 und dem mit Abstand hierzu angeordneten Abförderer 3 ist eine Lücke 4 ausgebildet, deren Länge ein mehrfaches eines Flaschendurchmessers beträgt. In dieser Lücke 4 sitzt eine Bodeninspektionsvorrichtung 11 mit einer unter den Flaschen 1 angeordneten Lichtquelle und einer über den Flaschen 1 angeordneten Kamera. Außerdem ist eine erste Seiteninspektionsvorrichtung 12 mit einer Lichtquelle und einer Kamera am Zuförderer 2 und eine gleichartige zweite Seiteninspektionsvorrichtung 13 am Abförderer 3 angeordnet. Die Flaschen 1 stehen im Bereich der beiden Seiteninspektionsvorrichtungen 12, 13 frei und ohne Eigenrotation auf den Scharnierbandketten des Zu- bzw. Abförderers 2, 3 und können daher über ihre gesamte Höhe ungestört auf Verschmutzungen usw. kontrolliert werden.

An die erste Seiteninspektionsvorrichtung 12 schließt sich ein Drehförderer 8 an, welcher die auf dem Zuförderer 2 stehenden Flaschen 1 um ca. 90 Grad verdreht. Auf diese Weise werden die im Bereich der ersten Seiteninspektionsvorrichtung 12 in bzw. entgegen der Transportrichtung weisenden Wandbereiche seitlich nach außen gedreht und geraten somit voll ins Blickfeld der zweiten Seiteninspektionsvorrichtung 13. Der Drehförderer 8 weist insgesamt vier endlose Fördermittel 9, 9a, 10, 10a in Form von Zahnriemen auf, die an der Außenseite mit einem elastischen Schwammgummibelag versehen sind. Die Fördermittel 9 bis 10a liegen paarweise übereinander an gegenüberliegenden Seiten des Zuförderers 2 im Bereich zwischen der ersten Seiteninspektionsvorrichtung 12 und der Lücke 4, so daß sie die von der ersten Seiteninspektionsvorrichtung 12 kommenden Flaschen 1 zwischen sich elastisch einklemmen und vor der Lücke 4 wieder freigeben. Die Fördermittel 9 bis 10a laufen in zwei horizontalen Ebenen um und umschlingen gleichgroße Riemenscheiben, wobei die vorderen Riemenscheiben 14, 14a und 15, 15a mit Abstand übereinander an senkrechten Antriebswellen 18, 19 befestigt sind. Die oberen Fördermittel 14 und 15 greifen im oberen Rumpfbereich und die unteren Fördermittel 14a und 15a greifen im unteren Rumpfbereich seitlich an den Flaschen 1 an, so daß diese sicher fixiert sind, zusätzlich unterstützt durch die scharnierbandkette des zuförderers 2.

Die beiden Antriebswellen 18, 19 für die Fördermittel 9 bis 10a sowie die beiden Antriebswellen 27, 28 für den Zuförderer 2 und den Abförderer 3 werden durch einen im Gehäuse 24 sitzenden Motor 29 über einen strichpunktiert angedeuteten Getriebezug 30 synchron zueinander angetrieben, derart, daß der Zuförderer 2 und der Abförderer 3 die gleiche Geschwindigkeit V1 aufweisen. Die Geschwindigkeit V2 der beiden rechten Fördermittel 9, 9a ist um einen bestimmten Betrag kleiner und die Geschwindigkeit V3 der beiden linken Fördermittel 10, 10a ist um den gleichen Betrag größer als die Geschwindigkeit V1 des Zuförderers 2. Die Geschwindigkeiten V2 und V3 sind derart gewählt, daß die Flaschen 1 im Bereich des Drehförderers 8 um den gewünschten Drehwinkel von ca. 90 Grad verdreht werden, wobei ihre Mittelachse mit der Geschwindigkeit V1 bewegt wird. Die Flaschen 1 werden daher sanft und schonend um ihre eigene Achse gedreht, ohne Änderung ihrer Translationsbewegung.

An den Drehförderer 8 schließt sich der Zwischenförderer 5 an, der die Lücke 4 zwischen dem Zuförderer 2 und dem Abförderer 3 überbrückt und zu diesem Zweck den Endbereich des Zuförderers 2 und den Anfangsbereich des Abförderers 3 bestreicht. Der Zwischenförderer 5 weist zwei endlose Fördermittel 6, 7 auf, gebildet durch Zahnriemen mit einem elastischen Belag aus Schwammgummi an der Außenseite. Die beiden Fördermittel 6, 7 laufen mit Abstand in einer horizontalen Ebene um und klemmen die vom Drehförderer 8 freigegebenen Flaschen 1 zwischen sich ein. Die Flaschen 1 werden so ohne Bodenunterstützung über die Lücke 4 bzw. durch die Bodeninspektionsvorrichtung 11 getragen und dann auf dem Abförderer 3 abgestellt.

Jedes Fördermittel 6, 7 läuft über zwei Riemenscheiben 16, 17, 20, 21, wobei die beiden vorderen Riemenscheiben 20, 21 auf senkrechten Antriebswellen 22, 23 befestigt sind. Diese werden durch den Getriebezug 30 vom Motor 29 synchron zum Zuförderer 2, Abförderer 3 und Drehförderer 8 angetrieben, derart, daß die beiden Fördermittel 6, 7 exakt die gleiche Geschwindigkeit V1 aufweisen wie auch der Zuförderer 2 und Abförderer 3. Die Flaschen 1 passieren somit die Bodeninspektionsvorrichtung 11 ohne Eigenrotation und werden ohne störenden Drehimpuls an den Abförderer 3 übergeben. Dort erfolgt eine zweite ungestörte Kontrolle der Wandung durch die zweite Seiteninspektionsvorrichtung 13. Die beiden hinteren Riemenscheiben 16, 17 des Zwischenförderers 5 sind frei drehbar auf den Antriebswellen 18, 19 des Drehförderers 8 gelagert und zwar zwischen dessen Riemenscheiben 14 und 14a bzw. 15 und 15a. Die Durchmesser aller Riemenscheiben und die Dicken der Fördermittel sind derart aufeinander abgestimmt, daß die in Transportrichtung laufenden Trume des Drehförderers 8 stufenlos in die in Transportrichtung laufenden Trume des Zwischenförderers 5 übergehen, wo ihre Drehung abgebremst wird. Da außerdem die beiden Fördermittel 6, 7 des Zwischenförderers 5 im mittleren Bereich des Flaschenrumpfes angreifen, werden die Flaschen 1 stabil und ruhig durch den Drehförderer 8 und den Zwischenförderer 5 transportiert. Es lassen sich daher sehr hohe Transportleistungen ohne Kippgefahr für die Flaschen 1 erzielen.

## Patentansprüche

1. Inspektionsmaschine für Gefäße mit einem Zuförderer (2), einem Abförderer (3), einem eine Lücke (4) zwischen diesen überbrückenden Zwischenförderer (5), der mindestens zwei an gegenüberliegenden Seiten der Gefäße angreifende, mit der gleichen Geschwindigkeit antreibbare endlose Fördermittel (6) aufweist, welche die Gefäße ohne Drehung vom Zuförderer auf den Abförderer überführen, und mit einer im Bereich der Lücke (4) angeordneten Bodeninspektionsvorrichtung (11),
**gekennzeichnet durch**
einen am Zuförderer (2) angeordneten Drehförderer (8), der mindestens ein seitlich an den Gefäßen angreifendes, angetriebenes endloses Fördermittel (9, 9a, 10, 10a) aufweist, welches die Gefäße auf dem Zuförderer verdreht, wobei
eine erste Seiteninspektionsvorrichtung (12) vor und eine zweite Seiteninspektionsvorrichtung (13) nach dem Drehförderer (8) angeordnet ist,
der Drehförderer (8) und der Zwischenförderer (5) sich im Bereich des Züförderers (2) überlappen,
endseitige Umlenkräder (14, 14a, 15, 15a) des Drehförderers (8) und anfangsseitige Umlenkräder (16, 17) des Zwischenförderers (5), die jeweils auf der gleichen Seite des Zuförderers (2) liegen, gleichachsig übereinander angeordnet sind, so dass das endlose Fördermittel des Drehförderers (8) höher bzw. tiefer liegt als das auf der gleichen Seite befindliche endlose Fördermittel des Zwischenförderers (5).

2. Inspektionsmaschine nach Anspruch 1,
**dadurch gekennzeichnet, dass**
der Drehförderer (8) die auf dem Zuförderer (2) stehenden Gefäße um einen von 360 Grad verschiedenen Winkel, vorzugsweise um ca. 90 Grad verdreht.

3. Inspektionsmaschine nach Anspruch 1 oder 2,
**dadurch gekennzeichnet, dass**
die erste Seiteninspektionsvorrichtung (12) im Bereich des Zuförderers (2) unmittelbar vor dem Drehförderer (8) angeordnet ist.

4. Inspektionsmaschine nach einem der Ansprüche 1 bis 3,
**dadurch gekennzeichnet, dass**
die zweite Seiteninspektionsvorrichtung (13) im Bereich des Abförderers (3) im Anschluss an den Zwischenförderer (5) angeordnet ist.

5. Inspektionsmaschine nach einem der Ansprüche 1 bis 4,
**dadurch gekennzeichnet, dass**
sich der Zwischenförderer (5) lückenlos an den Drehförderer (8) anschließt.

6. Inspektionsmaschine nach einem der Ansprüche 1 bis 5,
**dadurch gekennzeichnet, dass**
der Drehförderer (8) mindestens zwei an gegenüberliegenden Seiten der Gefäße angreifende, mit verschiedenen Geschwindigkeiten angetriebene endlose Fördermittel (9, 9a; 10, 10a) aufweisen.

7. Inspektionsmaschine nach Anspruch 6,
**dadurch gekennzeichnet, dass**
die mittlere Geschwindigkeit aus den Geschwindigkeiten der Fördermittel (9, 9a; 10, 10a) des Drehförderers (8) der übereinstimmenden Geschwindigkeit der beiden Fördermittel (6, 7) des Zwischenförderers (5) und ggf. des Zuförderers (2) und des Abförderers (3) entspricht.

8. Inspektionsmaschine nach einem der Ansprüche 1 bis 7,
**dadurch gekennzeichnet, dass**
der Drehförderer (8) auf jeder Seite des Zuförderers (2) zwei synchron antreibbare endlose Fördermittel (9, 9a; 10, 10a) aufweist.

9. Inspektionsmaschine nach Anspruch 1 und 8,
**dadurch gekennzeichnet, dass**
die jeweils auf der gleichen Seite des Zuförderers (2) befindlichen endseitigen Umlenkräder (14, 14a; 15, 15a) des Drehförderers (8) auf einer gemeinsamen Antriebswelle (18, 19) befestigt sind und dass die anfangsseitigen Umlenkräder (16, 17) des Zwischenförderers (5) auf den Antriebswellen (18, 19) zwischen zwei zusammengehörigen Umlenkrädern (14, 14a; 15, 15a) des Drehförderers (8) frei drehbar gelagert sind.

10. Inspektionsmaschine nach Anspruch 9,
**dadurch gekennzeichnet, dass**
die endseitigen Umlenkräder (20, 21) des Zwischenförderers (5) auf Antriebswellen (22, 23) befestigt sind.

11. Inspektionsmaschine nach einem der Ansprüche 8 bis 10,
**dadurch gekennzeichnet, dass**
die Fördermittel (9, 9a; 10, 10a) des Drehförderers (8) im oberen und unteren Rumpfbereich der rotationssymmetrischen Gefäße angreifen.

## Claims

1. An inspection machine for containers, comprising a feed conveyor (2), a discharge conveyor (3), an intermediate conveyor (5) which bridges a gap (4) existing thereinbetween and comprises at least two endless conveying means (6) that engage opposite sides of said containers and are drivable at the same speed and transfer said containers without any rotation from said feed conveyor to said discharge conveyor, and comprising a bottom inspection device (11) arranged in the area of said gap (4),
**characterized by**
a rotary conveyor (8) which is arranged at said feed conveyor (2) and comprises at least one driven endless conveying means (9, 9a, 10, 10a) which laterally engages said containers and rotates said containers on said feed conveyor,
a first side inspection device (12) being arranged in front of said rotary conveyor (8) and a second side inspection device (13) after said rotary conveyor (8),
said rotary conveyor (8) and said intermediate conveyor (7) overlapping each other in the area of said feed conveyor (2),
trailing pulleys (14, 14a, 15, 15a) of said rotary conveyor (8) and leading pulleys (16, 17) of said intermediate conveyor (5) which are each located at the same side of said feed conveyor (2) being coaxially arranged one on top of the other, so that said endless conveying means of said rotary conveyor (8) is positioned at a higher level and a lower level, respectively, than said endless conveying means of said intermediate conveyor (5) which is located at the same side.

2. The inspection machine according to claim 1,
**characterized in that**
said rotary conveyor (8) rotates said containers standing on said feed conveyor (2) by an angle differing from 360 degrees, preferably by about 90 degrees.

3. The inspection machine according to claim 1 or 2,
**characterized in that**
said first side inspection device (12) is arranged in the area of said feed conveyor (2) directly in front of said rotary conveyor (8).

4. The inspection machine according to any one of claims 1 to 3,
**characterized in that**
said second side inspection device (13) is arranged in the area of said discharge conveyor (3) following said intermediate conveyor (5).

5. The inspection machine according to any one of claims 1 to 4,
**characterized in that**
said intermediate conveyor (5) follows said rotary conveyor (8) without any gap.

6. The inspection machine according to any one of claims 1 to 5,
**characterized in that**
said rotary conveyor (8) comprises at least two endless conveying means (9, 9a; 10, 10a) which engage opposite sides of said containers and are driven at different speeds.

7. The inspection machine according to claim 6,
**characterized in that**
the average speed calculated from the speeds of the conveying means (9, 9a; 10, 10a) of said rotary conveyor (8) equals the corresponding speed of the two conveying means (6, 7) of said intermediate conveyor (5) and, optionally, of said feed conveyor (2) and said discharge conveyor (3).

8. The inspection machine according to any one of claims 1 to 7,
**characterized in that**
at each side of said feed conveyor (2) said rotary conveyor (8) comprises two endless, synchronously drivable conveying means (9, 9a; 10, 10a).

9. The inspection machine according to claims 1 and 8,
**characterized in that**
the trailing pulleys (14, 14a; 15, 15a) of said rotary conveyor (8) which are each positioned at the same side of said feed conveyor (2) are mounted on a joint drive shaft (18, 19), and that the leading pulleys (16, 17) of said intermediate conveyor (5) are supported in a freely rotatable manner on said drive shafts (18, 19) between two associated pulleys (14, 14a; 15, 15a) of said rotary conveyor (8).

10. The inspection machine according to claim 9,
**characterized in that**
the trailing pulleys (20, 21) of said intermediate conveyor (5) are mounted on drive shafts (22, 23).

11. The inspection machine according to any one of claims 8 to 10,
**characterized in that**
said conveying means (9, 9a; 10, 10a) of said rotary conveyor (8) engage the upper and lower body portions of the rotationally symmetrical containers.

## Revendications

1. Machine d'inspection pour des récipients, comprenant un convoyeur d'alimentation (2), un convoyeur d'évacuation (3), un convoyeur intermédiaire (5), qui ponte un vide (4) entre ces deux convoyeurs et présente au moins deux moyens de transport sans fin (6), agissant sur des côtés opposés des récipients, entraînables à la même vitesse, et transférant les récipients sans rotation du convoyeur d'alimentation sur le convoyeur d'évacuation, et comprenant un dispositif d'inspection des fonds (11) disposé dans la zone du vide (4), **caractérisée par** un convoyeur rotatif (8), qui est disposé sur le convoyeur d'alimentation (2) et présente au moins un moyen de transport sans fin (9, 9a, 10, 10a) entrainé, agissant latéralement sur les récipients et faisant tourner les récipients sur le convoyeur d'alimentation, un premier dispositif d'inspection des côtés (12) étant disposé en amont du convoyeur rotatif (8) et un second dispositif d'inspection des côtés (13) étant disposé en aval de ce dernier, le convoyeur rotatif (8) et le convoyeur intermédiaire (5) se chevauchant dans la zone du convoyeur d'alimentation (2), des roues de renvoi côté fin (14, 14a, 15, 15a) du convoyeur rotatif (8) et des roues de renvoi côté départ (16, 17) du convoyeur intermédiaire (5), qui se situent respectivement sur le même côté du convoyeur d'alimentation (2), étant superposées dans le même axe de sorte que le moyen de transport sans fin du convoyeur rotatif (8) se situe plus haut ou plus bas que le moyen de transport sans fin, situé sur le même côté, du convoyeur intermédiaire (5).

2. Machine d'inspection suivant la revendication 1, **caractérisée en ce que** le convoyeur rotatif (8) fait tourner les récipients, situés en position verticale sur le convoyeur d'alimentation (2), d'un angle différent de 360°, de préférence d'un angle de 90°.

3. Machine d'inspection suivant l'une des revendications 1 et 2, **caractérisée en ce que** le premier dispositif d'inspection des côtés (12) est disposé directement en amont du convoyeur rotatif (8) dans la zone du convoyeur d'alimentation (2).

4. Machine d'inspection suivant l'une des revendications 1 à 3, **caractérisée en ce que** le second dispositif d'inspection des côtés (13) est disposé à la suite du convoyeur intermédiaire (5) dans la zone du convoyeur d'évacuation (3).

5. Machine d'inspection suivant l'une des revendications 1 à 4, **caractérisée en ce que** le convoyeur intermédiaire (5) se raccorde en continu au convoyeur rotatif (8).

6. Machine d'inspection suivant l'une des revendications 1 à 5, **caractérisée en ce que** le convoyeur rotatif (8) présente au moins deux moyens de transport sans fin (9, 9a ; 10, 10a) entraînés, agissant sur des côtés opposés des récipients et entraînés à différentes vitesses.

7. Machine d'inspection suivant la revendication 6, **caractérisée en ce que** la vitesse moyenne des vitesses des moyens de transport (9, 9a ; 10, 10a) du convoyeur rotatif (8) correspond à la vitesse coïncidente des deux moyens de transport (6, 7) du convoyeur intermédiaire (5), et éventuellement du convoyeur d'alimentation (2) et du convoyeur d'évacuation (3).

8. Machine d'inspection suivant l'une des revendications 1 à 7, **caractérisée en ce que** le convoyeur rotatif (8) présente de chaque côté du convoyeur d'alimentation (2) deux moyens de transport sans fin (9, 9a ; 10, 10a) entraînables en synchronisme.

9. Machine d'inspection suivant l'une des revendications 1 et 8, **caractérisée en ce que** les roues de renvoi côté fin (14, 14a ; 15, 15a) du convoyeur rotatif (8), situées respectivement sur le même côté du convoyeur d'alimentation (2), sont fixées sur un arbre moteur commun (18, 19), et **en ce que** les roues de renvoi côté départ (16, 17) du convoyeur intermédiaire (5) sont montées en libre rotation sur les arbres moteurs (18, 19) entre deux roues de renvoi (14, 14a ; 15, 15a) allant ensemble du convoyeur rotatif (8).

10. Machine d'inspection suivant la revendication 9, **caractérisée en ce que** les roues de renvoi côté fin (20, 21) du convoyeur intermédiaire (5) sont fixées sur des arbres moteurs (22, 23).

11. Machine d'inspection suivant l'une des revendications 8 à 10, **caractérisée en ce que** les moyens de transport (9, 9a ; 10, 10a) du convoyeur rotatif (8) agissent dans la zone du corps supérieure et inférieure des récipients à symétrie de révolution.
